# EUROPEAN PATENT APPLICATION

(11) **EP 4 549 324 A1**
(43) Date of publication of application: **07.05.2025**
(21) Application number: 23383115.5
(22) Date of filing: 31.10.2023
(51) Int. Cl.: B64F 5/10, B64C 3/18

(54) **ASSEMBLY OF AIRCRAFT WINGS**

(71) Applicant: Aritex Cading SAU., 08918 Badalona (ES)
(72) Inventor: LIRIO, Javier, 08918 Badalona, Barcelona (ES); GANCHEGUI, Carlos, 08918 Badalona, Barcelona (ES)
(74) Representative: Elzaburu S.L.P.

(57) **Abstract**

A clamp (200) is provided for securing an aircraft wing skin to an aircraft wing support structure. The clamp (200) comprises a means (208) for operating the clamp between a non-clamping configuration and a clamping configuration; an operation interface (211) configured to facilitate movement and/or operation of the clamp by an automated apparatus. The operation interface (211) comprises an attachment arrangement configured to facilitate attachment to a corresponding attachment arrangement provided by an automated apparatus. The means (208) for operating the clamp between a non-clamping configuration and a clamping configuration is provided with (i) an interface configuration configured to facilitate operation of the means for operating the clamp between a non-clamping configuration and a clamping configuration by an automated apparatus, and/or (ii) a prime mover for operating the clamp between a non-clamping configuration and a clamping configuration, the prime mover being operable by an automated apparatus.

## Description

### Background of the invention

The present disclosure relates to the assembly of aircraft wings.

The present invention concerns the assembly of aircraft wings. More particularly, but not exclusively, this invention concerns a method of assembling an aircraft wing arrangement for a fixed wing aircraft. The invention also concerns a clamp for securing an aircraft wing skin to an aircraft wing support structure, a group of clamps and an automated apparatus for assembling an aircraft wing arrangement for a fixed-wing aircraft

Aircraft wings are typically assembled by clamping upper and lower wing skins to a wing support structure that provides structural strength to the wing. The wing support structure typically comprises spars and ribs. Pilot holes are drilled through the wing skins into the spars and ribs. The clamps are released and the wing skins are removed so that any burrs may be removed. The wing skins are then replaced, the clamps reapplied and larger fixing apertures are formed using the pilot holes as guides. Fastenings, such as rivets, are placed into the fixing apertures and are used to secure a wing skin to the aircraft structure arrangement. This method is time-consuming, since it is necessary to release the clamps, remove the wing skins, remove any burrs, put the wing skins back into alignment with the wing structure assembly and install the clamps. Furthermore, the need to reassemble the wing assembly after the removal of burrs increases the likelihood of misaligning the upper and lower wing skins being misaligned.

The present invention seeks to mitigate the above-mentioned problems. Alternatively or additionally, the present invention seeks to provide an improved method of assembling aircraft wings.

### Summary of the invention

In accordance with a first aspect of the present invention, there is provided a method of assembling an aircraft wing arrangement for a fixed-wing aircraft, the method comprising:
forming a clamped wing arrangement by clamping at least one wing skin to a wing support structure using at least one clamp;
forming at least one fixing aperture in the clamped wing arrangement to facilitate attachment of at least one wing skin to the wing support structure, at least one fixing aperture being formed in the clamped wing arrangement without forming a burr.

The applicant has discovered that it may be possible to make a fixing aperture to facilitate attachment of a wing skin to a wing support structure without having to dissemble a clamped arrangement to remove burrs.

The method may comprise inserting fixing means through at least one fixing aperture to facilitate attachment of at least one wing skin to the wing support structure.

Optionally, at least one, optionally more than one and optionally each fixing aperture is formed in the clamped wing arrangement without forming a burr.

Optionally, the clamping of at least one wing skin to the wing support structure in the clamped wing arrangement facilitates the formation of at least one fixing aperture in the clamped wing arrangement without the formation of a burr.

Optionally, at least one, optionally more than one and optionally each fixing aperture has a diameter of at least 5mm, optionally at least 6mm, optionally at least 7mm, optionally at least 8mm, optionally at least 9mm and optionally at least 10mm.

Optionally at least one, optionally more than one and optionally each fixing aperture has a diameter of no more than 50mm, optionally no more than 45mm, optionally no more than 40mm and optionally no more than 35mm.

Optionally, at least one, optionally more than one and optionally each fixing aperture has a diameter of from 5 to 50mm, optionally of from 5 to 45mm, optionally of from 5 to 40mm, optionally of from 5 to 35mm, optionally of from 10 to 50mm, optionally of from 10 to 45mm, optionally of from 10 to 40mm and optionally of from 10 to 35mm.

Optionally, at least one, optionally more than one and optionally each fixing aperture is formed using a drill bit having a diameter of at least 5mm, optionally at least 6mm, optionally at least 7mm, optionally at least 8mm, optionally at least 9mm and optionally at least 10mm.

Optionally at least one, optionally more than one and optionally each fixing aperture is formed using a drill bit having a diameter of no more than 50mm, optionally no more than 45mm, optionally no more than 40mm and optionally no more than 35mm.

Optionally, at least one, optionally more than one and optionally each fixing aperture is formed using a drill bit having a diameter of from 5 to 50mm, optionally of from 5 to 45mm, optionally of from 5 to 40mm, optionally of from 5 to 35mm, optionally of from 10 to 50mm, optionally of from 10 to 45mm, optionally of from 10 to 40mm and optionally of from 10 to 35mm.

Forming a clamped wing arrangement may comprise clamping at least one wing skin to a wing support structure using a plurality of clamps, optionally at least 5 clamps, optionally at least 10 clamps and optionally at least 15 clamps. The application of a plurality of clamps may be advantageous because using a plurality of clamps may reduce the risk of a burr forming (for example, by reducing the likelihood of the clamped wing arrangement flexing during the drilling process, therefore allowing room for a burr to form).

Optionally, at least one, optionally more than one and optionally each fixing aperture may be formed within 50mm of an adjacent clamp, optionally within 40mm of an adjacent clamp, optionally within 30mm of an adjacent clamp and optionally within 20mm of an adjacent clamp. It is thought that forming a fixing aperture proximate to an adjacent clamp reduces the risk of formation of a burr.

For the avoidance of doubt, the method may comprise clamping at least one wing skin to a wing support structure using at least one clamp after one or more fixing apertures are formed in the clamped wing arrangement.

Forming a clamped wing arrangement may comprise clamping two wing skins to the wing support structure, optionally an upper and a lower wing skin. In this connection, the term "upper" and "lower" refers to the position of the wing skin should the wing be attached to the fuselage of an aircraft. Those skilled in the art would be able to differentiate an upper wing skin from a lower wing skin.

The clamping of at least one wing skin to the wing support structure may optionally facilitate the formation of a plurality of fixing apertures in the clamped wing arrangement without the formation of a burr.

The method may comprise forming a plurality of fixing apertures in the clamped wing arrangement to facilitate attachment of at least one wing skin to the wing support structure. The method may comprise inserting a plurality of fixing means, each fixing means being inserted through a respective fixing aperture. Those skilled in the art will realise that one need not form the plurality of fixing apertures before inserting the fixing means. For example, one could form a first fixing aperture, insert a fixing means through the first fixing aperture and secure the wing skin to the wing support structure, and then form a second fixing aperture, insert a fixing means through the second fixing aperture and secure the wing skin to the wing support structure.

The method may comprise removing at least one clamp (and optionally more than one clamp) and subsequently forming at least one fixing aperture to facilitate attachment of at least one wing skin to the wing support structure. The removal of at least one clamp may optionally take place after at least one fixing means has been used to secure a wing skin to the aircraft structure arrangement, the at least one fixing means having been used proximate to the clamp that has been removed. For example, a clamp may be applied, and one or more fixing apertures formed proximate to the clamp. Fixing means may then be inserted into those fixing apertures, and used to secure the wing skin to the aircraft structure arrangement. The clamp may then be removed and one or more fixing apertures formed, optionally in a portion of the wing that was previously obscured or made inaccessible by the (now removed) clamp.

Optionally, forming the or each fixing aperture may comprise mechanical boring or drilling, for example.

The method may comprise attaching at least one wing skin to the wing support structure using at least one fixing means, and optionally using a plurality of fixing means.

Optionally, at least one fixing aperture, optionally more than one fixing aperture and optionally each fixing aperture may be formed in the absence of a pilot hole. Optionally, the formation of at least one, optionally more than one and optionally each fixing aperture may comprise forming a pilot hole in the clamped wing arrangement. If one or more pilot holes is formed, then the or each pilot hole is typically formed in the clamped wing arrangement without forming a burr. Optionally, forming the or each fixing aperture may comprise forming the fixing aperture using a pilot hole. The or each fixing aperture is larger than the respective pilot hole from which the fixing aperture is formed.

For the avoidance of doubt, the or each fixing aperture is sized to accommodate a fixing means, such as a rivet, in particular, a shaft of a rivet or the shaft of a bolt. Those skilled in the art will realise that a pilot hole is generally too small to accommodate the fixing means that is accommodated by the fixing aperture.

The method may comprise attaching at least one wing skin to the wing support structure without having previously removed the wing skin from the clamped wing arrangement. The applicant has discovered that because the method of the present invention does not form burrs, then it is possible to form fixing apertures in the wing support structure and attach the wing skin to the adjacent wing support structure without removing the wing skin so that burrs may be removed.

The aircraft wing arrangement may optionally extend from an inboard portion to an outboard portion. The inboard portion may optionally be associated with or provide, a wing root. The inboard portion may be considered to be a root portion of the clamped wing arrangement.

The aircraft wing arrangement may optionally be elongate. Optionally, the aircraft wing arrangement may have a length of at least 15m, optionally at least 18m, optionally at least 21m, optionally at least 24m, optionally at least 27m, optionally at least 30m, optional at least 33m and optionally at least 36m.

The aircraft wing arrangement, optionally the outboard portion, may optionally comprise a wing tip. The outboard portion may optionally be configured to facilitate the attachment of a wing tip device thereto. Such wing tip devices are provided to reduce drag, and are well-known to those skilled in the art.

The aircraft wing arrangement is optionally devoid of control surfaces. Such control surfaces are optionally subsequently added.

The wing support structure typically comprises those features of the wing that provide structural strength to the wing, such as ribs and spars. The wing support structure may therefore optionally comprise at least one rib and at least one spar. The wing support structure may optionally comprise a plurality of ribs and a plurality of spars. Those skilled in the art will realise that other strength-providing features may be used.

The wing support structure and/or the wing skin may be configured to facilitate the formation of at least one fixing aperture (and optionally the formation of more than one fixing aperture and optionally the formation of each fixing aperture) without forming a burr. The wing skin may optionally be configured to facilitate the formation of at least one fixing aperture without the formation of a burr. In this connection, the wing skin may comprise a composite material, such as fibre-reinforced plastic, such as glass fibre reinforced plastic and may optionally have a thickness of at least 3mm, optionally at least 4mm, optionally at least 5mm, optionally no more than 50mm, optionally no more than 45mm and optionally no more than 40mm. The wing skin need not be of uniform thickness. For example, a wing skin may optionally be thicker proximate to a landing gear. A wing skin may be thinner proximate a wing tip. It is understood that such a wing skin may facilitate the formation of fixing aperture(s) without forming a burr. One or more spars may optionally be configured to facilitate the formation of at least one fixing aperture without the formation of a burr. One or more of the position, composition, shape, size and orientation of one or more spars (optionally a spar located proximate to a front or a rear edge of the clamped wing arrangement) may optionally be configured to facilitate the formation of at least one fixing aperture without the formation of a burr. Optionally, one or more spar may comprise an outwardly-facing flange. For example, if the wing support structure comprises a spar proximate a front edge of the clamped wing arrangement, then the spar may comprise a forwardly-extending flange. Similarly, if the wing support structure comprises a spar proximate a rear edge of the clamped wing arrangement, then the spar may comprise a rearwardly-extending flange. At least one, optionally more than one and optionally each spar may comprise composite material, such as fibre-reinforced plastic, such as glass fibre reinforced plastic.

The clamped wing arrangement may comprise a front edge and a rear edge, the positions "front" and "rear" indicating the relative location of that particular feature should the completed wing be attached to a fuselage of an aircraft. At least one and optionally more than one clamp secures at least one wing skin to the wing support structure at, or proximate to, the rear edge of the clamped wing arrangement. Optionally, a majority of a plurality of clamps secure at least one wing skin to the wing support structure at, or proximate to, the rear edge of the clamped wing arrangement. Optionally, a minority of the plurality of clamps, optionally three or fewer, optionally two or fewer, optionally only one and optionally substantially no clamps secure at least one wing skin to the wing support structure at, or proximate to, the front edge of the clamped wing arrangement. Optionally, the clamp(s) that secure at least one wing skin to the wing support structure at, or proximate to, the front edge of the clamped wing arrangement are located at, or proximate to, a wing tip.

Optionally, at least one clamp and optionally more than one clamp, secures at least one wing skin to the wing support structure at, or proximate to, an outboard portion of the clamped wing arrangement (for example, at, or proximate to, a wing tip). The clamped wing arrangement may comprise an outboard edge portion, optionally located between the front and rear edges (for example, at a wing tip). Optionally, at least one clamp and optionally more than one clamp, secures at least one wing skin to the wing support structure at, or proximate to, the outboard edge portion of the clamped wing arrangement.

Optionally, at least one and optionally more than one clamp secures at least one wing skin to the wing support structure at, or proximate to, the rear edge of the clamped wing arrangement, proximate to the inboard portion or root of the clamped wing arrangement.

Optionally, at least one, optionally more than one and optionally a majority of a plurality of clamps that are used to secure the wing skins to the wing support structure secure at least one wing skin to the wing support structure at, or proximate to, the rear edge of the clamped wing arrangement, and within 50%, optionally 40% and optionally 30% of the length of the clamped wing arrangement from the inboard portion or root of the clamped wing arrangement. The applicant has discovered that it may be advantageous to apply lots of clamps to the rear edge of the clamped wing arrangement, close to the inboard portion or root of the clamped wing arrangement.

The wing support structure and at least one wing skin (and optionally two wing skins) may comprise a rearward projecting portion, optionally located proximate to the inboard portion or root of the clamped wing arrangement. Such a rearward projecting portion may be associated with the main landing gear. For example, the rearward projecting portion of the wing support structure may comprise a gear rib. At least one and optionally more than one clamp may secure at least one wing skin to the wing support structure at the rearward projecting portion. The rearward projecting portion may comprise an inward-facing edge. At least one and optionally more than one clamp may secure at least one wing skin to the wing support structure at the inward-facing edge of the rearward projecting portion. The rearward projecting portion may comprise a forward part. This forward part of the rearward projecting portion may be associated with a spar (for example, a rear spar). For example, the rearward projecting portion may project rearwardly of a spar. At least one and optionally more than one clamp may secure at least one wing skin to the wing support structure at the forward part of the rearward projecting portion.

A first set of one or more clamps may optionally secure at least one wing skin to the wing support structure at, or proximate to, the rear edge of the clamped wing arrangement, proximate to the inboard portion or root of the clamped wing arrangement. As mentioned above, the wing support structure and at least one wing skin may comprise a rearward projecting portion, located proximate to the inboard portion or root of the clamped wing arrangement A second set of one or more clamps may optionally secure at least one wing skin to the wing support structure at the rearward projecting portion, optionally at an inward-facing edge of the rearward projecting portion. The second set of clamps is optionally outboard of the first set of clamps. A third set of one or more clamps may optionally secure at least one wing skin to the wing support structure at the forward part of the rearward projecting portion. A fourth set of one or more clamps may optionally secure at least one wing skin to the wing support structure at, or proximate to, the wing tip.

For the avoidance of doubt, "first", "second", "third" and "fourth" are used to differentiate the sets of clamps from one another, and are not used to imply that any or all sets of clamps need be present. For example, the clamped wing arrangement may comprise none, one or more, or all of the first, second, third and fourth sets of clamps.

The or each clamp may secure at least one (and optionally only one) wing skin to the wing support structure. It is envisaged that some clamps will secure one (and only one) wing skin to the wing support structure, and some clamps will secure two wing skins to the wing support structure.

Optionally, the or each wing skin may comprise composite material. Optionally, the or each wing skin may comprise aluminium.

Optionally, the wing support structure may comprise aluminium.

The applicant has discovered that it may be desirable for at least one, optionally more than one and optionally each clamp to be operable to exert a clamping force of at least 5000N, optionally at least 6000N, optionally at least 7000N, optionally at least 8000N, optionally at least 9000N and optionally at least 10000N. Optionally, at least one, optionally more than one and optionally each clamp may be operable to exert a clamping force of no more than 40000N, optionally no more than 30000N, optionally no more at least 20000N, optionally no more than 15000N, optionally no more than 12000N and optionally no more than 10000N.

Optionally at least one, optionally more than one and optionally each clamp comprises one or more pairs of arms, Optionally, at least one (and optionally only one) of each pair of arms first and second arms may be movable during operation of the clamp between non-clamping and clamping configurations. At least one, optionally more than one and optionally each pair of arms may be operable to exert a clamping force of at least 5000N, optionally at least 6000N, optionally at least 7000N, optionally at least 8000N, optionally at least 9000N and optionally at least 10000N. Optionally, at least one, optionally more than one and optionally each pair of arms may be operable to exert a clamping force of no more than 20000N, optionally no more than 15000N, optionally no more at least 12000N and optionally no more than 10000N.

Optionally, at least one, optionally more than one and optionally each clamp may be applied non-manually, optionally in an automated process, optionally by an automated apparatus, such as a suitably-programmed robotic apparatus.

Forming the clamped wing arrangement may comprise providing a plurality of clamps, locating each of the clamps in position relative to the wing support structure, and operating each of the plurality of clamps so as to clamp at least one wing skin to the aircraft wing structure. Those skilled in the art will realise that such a process may be performed in a number of ways. For example, all of the clamps may be located in position, and then each clamp may be operated sequentially to provide a full clamping force. Alternatively, each clamp may be operated to provide an intermediate clamping force less than the full clamping force, then each clamp may be further tightened until a full clamping force is applied by each clamp. Alternatively, a first clamp may be located in position and operated to provide a clamping force before a second clamp is located in position and operated to provide a clamping force, and so on.

Optionally, at least one, optionally more than one and optionally each clamp is operable between an open, non-clamping configuration to and a clamping configuration. Optionally, at least one, optionally more than one and optionally each clamp comprises first and second clamping surfaces. The first and second clamping surfaces typically oppose one another, and contact the object or item which is to be clamped. In the open, non-clamping configuration the first and second clamping surfaces are optionally further apart than when the clamp is in the clamping configuration. Operation of the clamp from the non-clamping to the clamping configuration will cause relative movement of the first and second clamping surfaces towards one another. Conversely, operation of the clamp from the clamping to the non-clamping configuration will cause relative movement of the first and second clamping surfaces away from one another. Optionally, one or both (and optionally only one) of the first and second clamping surfaces is movable when the clamp is operable between the non-clamping and clamping configurations.

Optionally, at least one, optionally more than one and optionally each clamp comprises a plurality of first clamping surfaces and/or a plurality of second clamping surfaces. In this case, the first and second clamping surfaces typically oppose one another, and contact the object or item which is to be clamped. In the open, non-clamping configuration the plurality of first clamping surfaces is typically further apart from the plurality of second clamping surfaces than when the clamp is in the clamping configuration. Operation of the clamp from the non-clamping to the clamping configuration will cause relative movement of the plurality of first clamping surfaces and the plurality of second clamping surfaces towards one another. Conversely, operation of the clamp from the clamping to the non-clamping configuration will cause relative movement of the plurality of first clamping surface and the plurality of second clamping surfaces away from one another. Optionally, one or both (and optionally only one) of the plurality of first clamping surface and the plurality of second clamping surfaces is movable when the clamp is operable between the non-clamping and clamping configurations.

Optionally, at least one, optionally more than one and optionally each clamp comprises first and second clamping surfaces, at least one of which is resiliently mounted.

Optionally, at least one, optionally more than one and optionally each clamp comprises first and second clamping surfaces, at least one of which is movable so as to be able to conform to the shape of an adjacent surface.

Optionally, at least one, optionally more than one and optionally each clamp comprises first and second clamping surfaces, at least one of which is rotatable and/or translatable so as to be able to conform to the shape of an adjacent surface. For example, a first surface, second surface, a plurality of first surfaces or a plurality of second surfaces may be coupled to a carrier that is mounted for translational motion.

Optionally, at least one, optionally more than one and optionally each clamp comprises an operation interface configured to facilitate movement and/or operation of the clamp by an automated apparatus. The operation interface may comprise an interface surface for engagement with a corresponding interface surface provided by an automated apparatus. The interface surface may, for example, be substantially planar, for engagement with a corresponding substantially planar interface surface provided by an automated apparatus.

The operation interface may comprise an attachment arrangement configured to facilitate attachment to a corresponding attachment arrangement provided by an automated apparatus. For example, the clamp attachment arrangement may comprise at least one male or female portion for mating with a corresponding female or male portion provided by an automated apparatus. For example, the clamp attachment arrangement may comprise at least two male or female portions, or at least one male and at least one female portions, for mating with corresponding portions provided by an automated apparatus. At least one, optionally more than one, and optionally each male portion may optionally comprise a first region that is narrower than a second region. For example, at least one, optionally more than one, and optionally each male portion may optionally comprise a waist region. The waist region may be located between two non-waist regions. The waist region is typically narrower than the two non-waist regions. The operation interface may optionally comprise an information module readable by an automated apparatus, the information module optionally being readable by an automated apparatus to provide information in relation to one or more of the identity, location, orientation, and operational status of the clamp. The operational status may optionally be an indication of whether the clamp is in a clamping configuration or a non-clamping configuration. The information relating to location may optionally be an indication of whether the clamp is in the intended location. The information relating to orientation may optionally be an indication of whether the clamp is in the intended orientation.

Optionally, at least one, optionally more than one and optionally each clamp comprises a means for operating the clamp between an open, non-clamping configuration to and a clamping configuration. The means for operating the clamp between an open, non-clamping configuration to and a clamping configuration may comprise a clamp operating mechanism. Optionally, at least one, optionally more than one and optionally each a means for operating the clamp between an open, non-clamping configuration to and a clamping configuration may be configured to be operable by an automated apparatus. Optionally, at least one, optionally more than one and optionally each a means for operating the clamp between an open, non-clamping configuration to and a clamping configuration may be configured to move one or both (and optionally only one) of the first and second clamping surfaces. Optionally, at least one, optionally more than one and optionally each a means for operating the clamp between an open, non-clamping configuration to and a clamping configuration may comprise a rotatable member configured to be rotatable so as to cause movement between the non-clamping and clamping configurations. The rotatable member may be configured such that the rotational movement of the rotatable member causes translational movement, which in turn, causes movement between the non-clamping and clamping configurations. The rotatable member may, for example, comprise a threaded member, rotation of which causes movement, such as translational movement, between the non-clamping and clamping configurations. Optionally, at least one, optionally more than one and optionally each a means for operating the clamp between an open, non-clamping configuration to and a clamping configuration may therefore comprise a lead screw mechanism. A ball screw would be an example of a lead screw mechanism.

The means for operating the clamp between an open, non-clamping configuration to and a clamping configuration may be provided with an interface configuration configured to facilitate operation of the means for operating the clamp between an open, non-clamping configuration to and a clamping configuration by an automated apparatus. The interface configuration may comprise a configuration for engagement with a corresponding configuration providing by an automated apparatus. When the interface configuration engages with the corresponding configuration provided by an automated apparatus, the automated apparatus may operate the means for operating the clamp between an open, non-clamping configuration to a clamping configuration. For example, the interface configuration may comprise a female configuration, such as a slot or groove, for receiving a male configuration (such as a flat screwdriver head) provided by an automated apparatus. Such an arrangement permits an automated apparatus to sense or measure the torque exerted by the interface configuration on the corresponding configuration of the automated apparatus, thereby providing some indication of the clamping force.

Optionally, at least one, optionally more than one and optionally each clamp comprises at least one arm, and optionally two arms. Optionally, a first clamping surface (or a plurality of first clamping surfaces) is coupled to a first arm and a second clamping surface (or a plurality of second clamping surfaces) is coupled to a second arm. Optionally, at least one (and optionally only one) of the first and second arms is movable during operation of the clamp between non-clamping and clamping configurations. Optionally, the first and second arms are movable relative to one another during operation of the clamp between non-clamping and clamping configurations. For example, during operation of the clamp, one or both of the first and second arms may be moved.

If the first clamping surface (or a plurality of first clamping surfaces) is coupled to a first arm, then the or each first clamping surface may be rotatable relative to the first arm, for example, rotatable about an axis substantially parallel to the long axis of the first arm. Similarly, if the second clamping surface (or a plurality of second clamping surfaces) is coupled to a second arm, then the or each second clamping surface may be rotatable relative to the second arm, for example, rotatable about an axis substantially parallel to the long axis of the second arm. Alternatively or additionally, the or each first clamping surface may be rotatable about an axis substantially normal to the long axis of the first arm. Alternatively or additionally, the or each second clamping surface may be rotatable about an axis substantially normal to the long axis of the second arm. Alternatively or additionally, the first clamping surface (or the plurality of first clamping surfaces) may be translatable in a direction parallel to the long axis of the first arm. Alternatively or additionally, the second clamping surface (or the plurality of second clamping surfaces) may be translatable in a direction parallel to the long axis of the second arm. For example, the first and/or second clamping surfaces (or the plurality of first, or the plurality of second clamping surfaces) may be coupled to a clamping surface carrier that is translatable relative to the respective arm. For example, a linear bearing may be provided to facilitate movement of the first and/or second clamping surface (or the plurality of first or second clamping surfaces) relative to the respective arm.

Optionally, at least one, optionally more than one and optionally each clamp comprises a lever, optionally a first class lever. Optionally, a pivot is provided between a first or second clamping surface (or a plurality of first clamping surfaces or second clamping surfaces) and a means for operating the clamp between an open, non-clamping configuration to and a clamping configuration. Operation of the means for operating the clamp between an open, non-clamping configuration to and a clamping configuration causes relative movement of the first and second clamping surfaces (or the plurality of first or second clamping surfaces). Operation of the means for operating the clamp between an open, non-clamping configuration to and a clamping configuration may cause movement of one or both of the first and second clamping surfaces. Optionally, the clamp comprises an arm, the first or second clamping surface (or plurality of first or second clamping surfaces) being coupled to the arm (optionally at or near to a first end of the arm), the arm being pivotally mounted at the pivot, and the a means for operating the clamp between an open, non-clamping configuration to and a clamping configuration being coupled to the arm (optionally at or near to a second end of the arm).

At least one and optionally more than one clamp may comprise a first clamp part and a second clamp part, the first and second clamp part being attachable to one another to form the clamp. The first clamp part may comprise a first clamping surface, optionally a plurality of first clamping surfaces. The first clamp part may, in use, form an upper part of the clamp. The second clamp part may comprise a second clamping surface, and optionally a plurality of second clamping surfaces. The method may comprise locating the first and second clamp parts relative to the wing support structure, attaching the first and second parts together, and causing the clamp to operate from a non-clamping configuration to a clamping configuration. Causing the clamp to operate from a non-clamping configuration to a clamping configuration optionally comprises translational movement of the first clamping surface (or plurality of first clamping surfaces) and/or the second clamping surface (or plurality of second clamping surfaces). As mentioned above, the clamp may comprise a plurality of first clamping surfaces. At least one, optionally more than one and optionally each of the plurality of first clamping surfaces may be coupled to a supporting finger. The clamp optionally comprises a plurality of supporting fingers, each of which comprises at least one first clamping surface. The supporting fingers are typically mutually spaced to permit drilling or other aperture formation between adjacent fingers.

Optionally, at least one finger is movable about an axis of rotation between a first, higher position and a second, lower position in which said finger is proximate to a surface of the aircraft wing skin. This allows the finger to move to make good contact with a surface of an aircraft wing skin, even when the surface is irregular. The axis of rotation may optionally be at an angle of no more than 30 degrees to a longitudinal axis of the respective finger. Optionally, more than one finger may be movable about an axis of rotation between a first, higher position and a second, lower position in which said finger is proximate to a surface of the aircraft wing skin. Optionally, at least one and optionally more than one finger is coupled to a respective connector that is mounted for rotational motion. At least two fingers may be coupled so that when a first finger is in a higher position, the second finger is in a lower position. This may be achieved, for example, by the first and second fingers being coupled to a connector, the connector being mounted for rotational motion, the axis of rotation being provided between the first and second fingers. At least one finger may be movable about a first axis of rotation between a first, higher position and a second, lower position, and about a second axis of rotation between a third, higher position and a fourth, lower position. The first and second axes of rotation are typically not coaxial. The distance between the first axis of rotation and the finger is optionally smaller than the distance between the second axis of rotation and the finger. Optionally, more than one finger is movable about a first axis of rotation between a first, higher position and a second, lower position, and about a second axis of rotation between a third, higher position and a fourth, lower position. Optionally, more than one finger (optionally two fingers) is movable about a first axis of rotation between a first, higher position and a second, lower position, and about a second axis of rotation between a third, higher position and a fourth, lower position. Optionally, a first set of fingers is movable about a first axis of rotation between a first, higher position and a second, lower position (optionally wherein when a first of the first set of fingers is in a higher position, the second of the first set of fingers is in a lower position). The first set of fingers is optionally movable about a second axis of rotation. Movement about the second axis of rotation causes both the first and second of the first set of fingers to move between higher and lower positions. A second set of fingers may also be provided. The second set of fingers is movable about a third axis of rotation between a first, higher position and a second, lower position (optionally wherein when a first of the second set of fingers is in a higher position, the second of the second set of fingers is in a lower position). The second set of fingers is optionally movable about the second axis of rotation. Movement about the second axis of rotation causes both the first and second of the second set of fingers to move between higher and lower positions. Optionally, when the first set of fingers is in a higher position by virtue of movement about the second rotational axis, the second set of fingers is in a lower position (and vice versa). At least one, optionally more than one, and optionally each clamp may comprise an indicator for indicating whether or not the clamp is in a non-clamping configuration. A clamp typically has to be "open" prior to use. The status of the indicator may be sensed by a clamp-open sensor. The clamp-open sensor may be provided by an automated apparatus. The indicator may be operable between a first indicator configuration associated with the clamp being in a non-clamping, open configuration and a second indicator configuration associated with the clamp being in a non-open configuration. In this connection, the indicator may be movable between the first and second indicator configurations. The clamp-open sensor may be configured to sense the presence, proximity and/or location of the indicator. For example, if the indicator is in the first indicator configuration, the clamp-open sensor may produce a first sensor output. If the indicator is in the second indicator configuration, the clamp-open sensor may produce a second sensor output, different from the first sensor output.

The method may comprise sensing or measuring the degree of clamping exerted by at least one clamp. The sensing or measuring of the degree of clamping may comprise measurement of a clamping force or may comprise sensing or measuring a parameter that is associated with a degree of clamping. For example, a means for operating the clamp between an open, non-clamping configuration to and a clamping configuration is typically used to operate the clamp. The force required to operate the means for operating the clamp between an open, non-clamping configuration to and a clamping configuration when the clamp has been operated into a clamping configuration is far greater than when the clamp is not in a clamping configuration. For example, a means for operating the clamp between an open, non-clamping configuration to and a clamping configuration may comprise a configuration such as a slot for receiving a screwdriver head provided by an automated apparatus. The screwdriver head is rotated to actuate the means for operating the clamp between an open, non-clamping configuration to and a clamping configuration. As the clamp is operated into a clamping configuration, the force required to turn the screwdriver head increases dramatically. This increase in force indicates that the clamp is in a clamped configuration.

The method may comprise determining if a clamp is in a non-clamping configuration. A clamp typically has to be "open" prior to use. This may optionally be performed using an automated process, and/or may optionally be performed using a suitably-programmed automated apparatus. The method may therefore optionally comprise operating the clamp into a non-clamping configuration if it is determined that the clamp is not in a non-clamping configuration.

The method of the first aspect of the present invention may be automated, and may optionally be performed using a suitably-programmed automated apparatus, such as a robot.

Forming a clamped wing arrangement by clamping a wing support structure to at least one wing skin using at least one clamp may optionally comprise, based on the intended location of a clamp, optionally identifying a desired clamp, optionally locating the desired clamp, optionally engaging with the desired clamp, optionally determining whether the desired clamp is in a non-clamping configuration and if not, operating the desired clamp into a non-clamping configuration, optionally placing the desired clamp in the non-clamping position at the intended location and optionally operating the desired clamp into a clamping configuration, and optionally sensing or measuring the degree of clamping exerted by at least one clamp. This process may be repeated multiple times for multiple desired clamps. This process may be performed substantially automatically, and optionally may be performed using a suitably-programmed automated apparatus, such as a clamp handling module. This process need not be undertaken in the order stated above.

Some clamps, for example, larger clamps, may be provided in more than one part, which parts are movable individually. Forming a clamped wing arrangement by clamping at least one wing skin to the wing support structure may optionally comprise, based on the intended location of a clamp, optionally identifying a desired clamp having first and second clamp parts, optionally locating the first and second parts of the desired clamp, optionally moving the first part of the desired clamp to the intended location, optionally moving the second part of the desired clamp to the intended location, optionally attaching the first and second parts together, and optionally operating the desired clamp into a clamping configuration, and optionally sensing or measuring the degree of clamping exerted by at least one clamp. This process may be repeated multiple times for multiple desired clamps. This process may be performed substantially automatically, and optionally may be performed using a suitably-programmed automated apparatus, such as a clamp handing apparatus. This process need not be undertaken in the order stated above.

Forming at least one fixing aperture in the clamped wing arrangement to facilitate attachment of at least one wing skin to the wing support structure may be performed using a suitably-programmed automated apparatus, such as an aperture-forming module, such as an automated drilling module. The aperture-forming module is optionally different from the clamp handling module. The aperture-forming apparatus may be capable of forming pilot holes.

Insertion of fixing means through at least one fixing aperture may be performed using a suitably-programmed automated apparatus, such as an fixing-handling module. The fixing-handling module is optionally different from the clamp handling module and/or the aperture-forming module.

Attaching at least one wing skin to the aircraft structure arrangement may be performed using a suitably-programmed automated apparatus, such as an attachment module, such as a riveting module. The attachment apparatus is optionally different from the clamp handling module, the aperture-forming module and/or the fixing-handling module.

In accordance with a second aspect of the present invention, there is provided a method of assembling an aircraft wing for a fixed-wing aircraft, the method comprising:
forming a clamped wing arrangement by clamping at least one wing skin to a wing support structure using at least one clamp; and
(a) forming at least one fixing aperture in the clamped wing arrangement to facilitate attachment of at least one wing skin to the wing support structure, at least one of the fixing apertures being formed without previously having formed a pilot aperture; and/or
(b) forming at least one pilot hole in the clamped wing arrangement, and then forming at least one fixing aperture using a respective pilot hole in the clamped wing arrangement.

The applicant has discovered that it may be possible to form fixing apertures in the clamped wing arrangement without having to dissemble a clamped wing arrangement, for example, to remove burrs.

The method may comprise inserting fixing means through at least one fixing aperture to facilitate attachment of at least one wing skin to the wing support structure.

The clamping of at least one wing skin to the wing support structure in the clamped wing arrangement optionally facilitates the formation of at least one fixing aperture in the clamped wing arrangement without the formation of a burr.

Forming a clamped wing arrangement may comprise clamping more than one wing skin to the wing support structure, for example, an upper wing skin and a lower wing skin. The wing support structure may be clamped between the upper and lower wing skins. Both the upper and lower wing skins may be substantially devoid of pilot apertures for the formation of fixing apertures for the receipt of fixings for securing at least one wing skin to the wing support structure.

The method of the second aspect of the present invention may comprise one or more of the features of the method of the first aspect of the present invention.

In accordance with a third aspect of the present invention, there is provided a method of assembling an aircraft wing arrangement for a fixed-wing aircraft, the method comprising:
forming a clamped wing arrangement by clamping at least one wing skin to a wing support structure using at least one clamp;
forming at least one fixing aperture in the clamped wing arrangement to facilitate attachment of at least one wing skin to the wing support structure; and
inserting fixing means through at least one fixing aperture to facilitate attachment of at least one wing skin to the wing support structure;
wherein at least one of forming a clamped wing arrangement, forming at least one aperture and inserting fixing means is performed by a suitably-programmed automated apparatus.

The applicant has discovered that it may be possible to assemble such an aircraft wing arrangement using a suitably-programmed automated apparatus.

Optionally, at least two of, and optionally each of, forming a clamped wing arrangement, forming at least one fixing aperture and inserting fixing means is performed by a suitably-programmed automated apparatus.

Such a suitably-programmed automated apparatus may comprise one or more modules, at least one of the modules being configured to form a clamped wing arrangement, form at least one fixing aperture and/or insert fixing means.

The suitably-programmed automated apparatus may comprise one or more of a clamp handling module configured to form a clamped wing arrangement, an aperture-forming module for forming at least one fixing aperture and a fixing-handling module for inserting fixing means.

The method may comprise attaching at least one wing skin to the aircraft structure arrangement using at least one fixing means. The suitably-programmed apparatus may comprise an attachment module for securing at least one wing skin to the aircraft structure arrangement using at least one fixing means.

The method of the third aspect of the present invention may comprise one or more features of the first and/or second aspects of the present invention. For example, the clamping of at least one wing skin to the wing support structure facilitates the formation of at least one fixing aperture in the clamped wing arrangement without the formation of a burr.

The methods of the first, second and third aspects of the present invention may use at least one and optionally more than of the clamps of the fourth aspect of the present invention.

In accordance with a fourth aspect of the present invention, there is provided a clamp for securing an aircraft wing skin to an aircraft wing support structure, the clamp comprising:
a means for operating the clamp between a non-clamping configuration and a clamping configuration;
an operation interface configured to facilitate movement and/or operation of the clamp by an automated apparatus,
the operation interface comprising an attachment arrangement configured to facilitate attachment to a corresponding attachment arrangement provided by an automated apparatus;
the means for operating the clamp between a non-clamping configuration and a clamping configuration being provided with an interface configuration configured to facilitate operation of the means for operating the clamp between a non-clamping configuration and a clamping configuration by an automated apparatus, and/or the means for operating the clamp between a non-clamping configuration and a clamping configuration is provided with a prime mover for operating the clamp between a non-clamping configuration and a clamping configuration, the prime mover being operable by an automated apparatus.

The applicant has discovered that it may be possible for a clamp to be handled and operated by an automated apparatus.

The prime mover, if present, may comprise a motor or the like. The clamp may not comprise a prime mover, for example, in which case an automated apparatus may optionally e provided with a prime mover that is configured to engage with the clamp interface configuration configured to facilitate operation of the means for operating the clamp between a non-clamping configuration and a clamping configuration.

The clamp may comprise one or more of the features described above in relation to the method of the first aspect of the present invention. The operation interface may comprise an interface surface for engagement with a corresponding interface surface provided by an automated apparatus. The interface surface may, for example, be substantially planar, for engagement with a corresponding substantially planar interface surface provided by an automated apparatus.

The attachment arrangement may optionally comprise at least one male or female portion for mating with a corresponding female or male portion provided by an automated apparatus. For example, the attachment arrangement may comprise at least two male or female portions, or at least one male and at least one female portions, for mating with corresponding portions provided by an automated apparatus. The operation interface may optionally comprise an information provider readable by an automated apparatus, the information provider optionally being readable by an automated apparatus to provide information in relation to one or more of the identity, location, orientation, and operational status of the clamp. For example, the clamp may be provided with a marking that is readable by the automated apparatus.

The clamp may comprise first (or a plurality of first) and second (or a plurality of second) clamping surfaces, operation of the clamp between the non-clamping and clamping configurations being associated with relative movement of the first (or plurality of first) and second (or plurality of second) clamping surfaces. The means for operating the clamp between a non-clamping configuration and a clamping configuration may be configured to move one or both (and optionally only one) of the first (or plurality of first) and second (or plurality of second) clamping surfaces.

The means for operating the clamp between a non-clamping configuration and a clamping configuration may comprise a rotatable member configured to be rotatable so as to cause movement between the non-clamping and clamping configurations. The rotatable member may, for example, comprise a threaded member, rotation of which causes movement, such as translational movement, between the non-clamping and clamping configurations. Optionally, at least one, optionally more than one and optionally each a means for operating the clamp between an open, non-clamping configuration and a clamping configuration may therefore comprise a lead screw mechanism. A ball screw would be an example of a lead screw mechanism.

The interface configuration may comprise a configuration for engagement with a corresponding configuration providing by an automated apparatus. When the interface configuration engages with the corresponding configuration provided by an automated apparatus, the automated apparatus may operate the means for operating the clamp between a non-clamping configuration and a clamping configuration. For example, the interface configuration may comprise a male or female configuration, such as a slot or groove, for mating with a corresponding female or male configuration (such as a flat screwdriver head) provided by an automated apparatus. Such an arrangement permits an automated apparatus to sense or measure the torque exerted by the interface configuration on the corresponding configuration of the automated apparatus, thereby providing some indication of the clamping force.

The clamp optionally comprises at least one arm, and optionally two arms. Optionally, a first clamping surface (or a plurality of first clamping surfaces) is coupled to a first arm and a second clamping surface (or a plurality of second clamping surfaces) is coupled to a second arm. Optionally, at least one (and optionally only one) of the first and second arms is movable during operation of the clamp between non-clamping and clamping configurations.

At least one of the first and second clamping surfaces is optionally movable so as to be able to conform to the shape of an adjacent surface. One or both of the first and second clamping surfaces may optionally be rotatable and/or translatable, for example, so as to be able to conform to the shape of an adjacent surface. For example, if the first clamping surface (or a plurality of first clamping surfaces) is coupled to a first arm, then at least one and optionally each first clamping surface may be rotatable relative to the first arm, for example, rotatable about an axis substantially parallel to the long axis of the first arm. Similarly, if the second clamping surface (or a plurality of second clamping surfaces) is coupled to a second arm, then at least one and optionally each second clamping surface may be rotatable relative to the second arm, for example, rotatable about an axis substantially parallel to the long axis of the second arm. Alternatively or additionally, at least one and optionally each first clamping surface may be rotatable about an axis substantially normal to the long axis of the first arm. Alternatively or additionally, at least one and optionally each second clamping surface may be rotatable about an axis substantially normal to the long axis of the second arm. Alternatively or additionally, the first clamping surface (or a plurality of first clamping surfaces) may be translatable in a direction parallel to the long axis of the first arm. Alternatively or additionally, the second clamping surface (or a plurality of second clamping surfaces) may be translatable in a direction parallel to the long axis of the second arm. For example, the first and/or second clamping surface (or a plurality of first and/or second clamping surfaces) may be coupled to a clamping surface carrier that is translatable relative to the respective arm. For example, a linear bearing may be provided to facilitate movement of the first and/or second clamping surface (or a plurality of first and/or second clamping surfaces) relative to the respective arm. Optionally, at least one first clamping surface and/or at least one second clamping surface may be translatable in a direction normal to the long axis of the first arm and normal to a line extending between the first and second arms.

The clamp may optionally comprise a lever, optionally a first class lever. Optionally, a pivot is provided between a first or second clamping surface (or a plurality of first or second clamping surfaces) and a means for operating the clamp between a non-clamping configuration and a clamping configuration. Operation of the means for operating the clamp between a non-clamping configuration and a clamping configuration causes relative movement of the first and second clamping surface (or a plurality of first or second clamping surfaces), and optionally causes movement of the first and/or the second clamping surface (or a plurality of first or second clamping surfaces). Optionally, the clamp comprises an arm, the first or second clamping surface (or plurality of first or second clamping surfaces) being coupled to the arm (optionally at or near to a first end of the arm), the arm being pivotally mounted at the pivot, and the means for operating the clamp between a non-clamping configuration and a clamping configuration being coupled to the arm (optionally at or near to a second end of the arm).

The clamp may comprise a first clamp part and a second clamp part, the first and second clamp part being attachable to one another to form the clamp. The first clamp part may comprise a first clamping surface, optionally a plurality of first clamping surfaces. The first clamp part may, in use, form an upper part of the clamp. The second clamp part may comprise a second clamping surface, optionally a plurality of second clamping surfaces. The method may comprise locating the first and second clamp parts relative to the wing support structure, attaching the first and second parts together, and causing the clamp to operate from a non-clamping configuration to a clamping configuration. Causing the clamp to operate from a non-clamping configuration to a clamping configuration optionally comprises translational movement of the second clamping surface (or a plurality of second clamping surfaces) and/or the translational movement of the first clamping surface (or plurality of first clamping surfaces). As mentioned above, the clamp may comprise a plurality of first clamping surfaces. At least one, optionally more than one and optionally each of the plurality of first clamping surfaces may be coupled to a supporting finger. The clamp optionally comprises a plurality of supporting fingers, each of which comprises at least one first clamping surface. The supporting fingers are typically mutually spaced to permit drilling or other aperture formation between adjacent fingers.

In accordance with a fifth aspect of the present invention, there is provided a group of clamps, the group comprising a plurality of clamps in accordance with the fourth aspect of the present invention.

The applicant has discovered that it may be beneficial to have a group of clamps, in which group at least two of the clamps have different properties.

At least two of the clamps may have a mutually-different throat depth. The throat depth is the maximum distance that the clamp may be inserted onto the wing. At least one of the clamps optionally comprises a first and/or second clamping surface that is coupled to a clamping surface carrier that is translatable relative to a respective clamp arm. At least one of the clamps optionally comprises a first clamp part and a second clamp part, the first and second clamp part being attachable to one another to form the clamp. At least one of the clamps optionally comprises a lever, optionally a first class lever. Optionally, a pivot is provided between a first or second clamping surface (or a plurality of first or second clamping surfaces) and a means for operating the clamp between a non-clamping configuration and a clamping configuration. Operation of the means for operating the clamp between a non-clamping configuration and a clamping configuration causes relative movement of the first or second clamping surface (or plurality of first or second clamping surfaces). Optionally, at least one clamp comprises an arm, the first clamping surface being coupled to the arm (optionally at or near to a first end of the arm), the arm being pivotally mounted at the pivot, and the means for operating the clamp between a non-clamping configuration and a clamping configuration being coupled to the arm (optionally at or near to a second end of the arm). Optionally, at least one clamp is configured so that causing the clamp to operate from a non-clamping configuration to a clamping configuration optionally comprises translational movement of the first and/or second surface (or plurality of first or second clamping surfaces). At least one clamp optionally comprises a plurality of first surfaces. At least one, optionally more than one and optionally each of the plurality of first surfaces may be coupled to a supporting finger.

Optionally, the group optionally comprises a first clamp comprising a first and/or second clamping surface (or a plurality of first or second clamping surfaces) that is coupled to a clamping surface carrier that is translatable relative to a respective clamp arm, a second clamp comprising a pivot that is provided between a first or second clamping surface (or plurality of first or second clamping surfaces) and a means for operating the clamp between a non-clamping configuration and a clamping configuration, and a third clamp comprising a first clamp part and a second clamp part, the first and second clamp part being attachable to one another to form the clamp. The first clamp may also comprise a pivot that is provided between a first or second clamping surface (or plurality of first or second clamping surfaces) and an means for operating the clamp between a non-clamping configuration and a clamping configuration.

The group optionally comprises at least one and optionally more than one clamp comprising a first and/or second clamping surface (or a plurality of first or second clamping surfaces) that is coupled to a clamping surface carrier that is translatable relative to a respective clamp arm; at least one and optionally more than one clamp comprising a pivot that is provided between a first or second clamping surface (or a plurality of first or second clamping surfaces) and a means for operating the clamp between a non-clamping configuration and a clamping configuration; and at least one and optionally more than one clamp comprising a first clamp part and a second clamp part, the first and second clamp part being attachable to one another to form the clamp.

Optionally, at least one clamp that comprises a first clamp part and a second clamp part, the first and second clamp part being attachable to one another to form the clamp, comprises a plurality of first or second clamping surfaces, at least one of which may optionally be coupled to a supporting finger.

Optionally, at least one, optionally more than one and optionally each of the group of clamps comprises an operation interface for facilitating movement and/or operation of the clamp. Optionally at least 50%, optionally at least 60%, optionally at least 70%, optionally at least 80%, optionally at least 90% and optionally at least all of the clamps of the group comprise substantially the same operation interface.

In accordance with a sixth aspect of the present invention, there is provided an automated apparatus for assembling an aircraft wing arrangement for a fixed-wing aircraft, the apparatus comprising:
a clamp-handling module operable to form a clamped wing arrangement by clamping at least one wing skin to a wing support structure using at least one clamp;
an aperture-forming module operable to form at least one fixing aperture in the clamped wing arrangement to facilitate attachment of at least one wing skin to the wing support structure; and
one or both of:
   a fixing-handling module configured to insert fixing means through at least one fixing aperture to facilitate securing at least one wing skin to the wing support structure;
   an attachment module configured to attach at least one wing skin to the aircraft structure arrangement using at least one fixing means.

The apparatus may have one of more of the features described above in relation to the methods of the first, second and third aspects of the present invention. The apparatus may be configured to perform a method in accordance with the first, second and/or third aspects of the present invention.

The apparatus may be configured to handle a clamp in accordance with the fourth aspect of the present invention.

It will of course be appreciated that features described in relation to one aspect of the present invention may be incorporated into other aspects of the present invention. For example, the method of the invention may incorporate any of the features described with reference to the apparatus of the invention and vice versa. For example, at least one, optionally more than one and optionally each of the clamps used in the methods of the first, second and/or third aspects of the present invention may be a clamp in accordance with the fourth aspect of the present invention. Similarly, the methods of the first, second and/or third aspects of the present invention may use a group of clamps in accordance with the fifth aspect of the present invention. Likewise, the methods of the first, second and/or third aspects of the present invention may use an apparatus in accordance with the sixth aspect of the present invention.

### Description of the drawings

Embodiments of the present invention will now be described by way of example only with reference to the accompanying schematic drawings of which:
Figure 1 shows a schematic view of a method according to a first embodiment of the invention;
Figure 2 shows a schematic view of a clamped wing arrangement from above;
Figure 2A shows a schematic view of a portion of the wing from above, without clamps in place;
Figure 3 shows a schematic view of a clamped wing arrangement from below;
Figure 3A shows a schematic cross-sectional view through the clamped wing arrangement of Figures 2, 2A and 3;
Figure 4 shows a schematic view of part of the clamped wing arrangement of Fig. 2 in the area of the gear rib;
Figure 5A shows a perspective view of a clamp according to an embodiment of the invention;
Figure 5B shows a perspective cross-sectional view of the clamp of Fig. 5A;
Figure 6A shows a perspective view of a clamp according to an alternative embodiment of the invention;
Figure 6B shows a perspective cross-sectional view of the clamp of Fig. 6A;
Figure 7 shows a perspective view of a clamp according to another embodiment of the invention;
Figure 8 shows a perspective view of a group of clamps according to yet another embodiment of the invention;
Figure 9 shows a schematic view of a method according to another embodiment of the invention;
Figure 10 shows a schematic view of a method according to a further embodiment of the invention; and
Figure 11 shows a schematic view of an apparatus according to a further embodiment of the invention.

### Detailed description

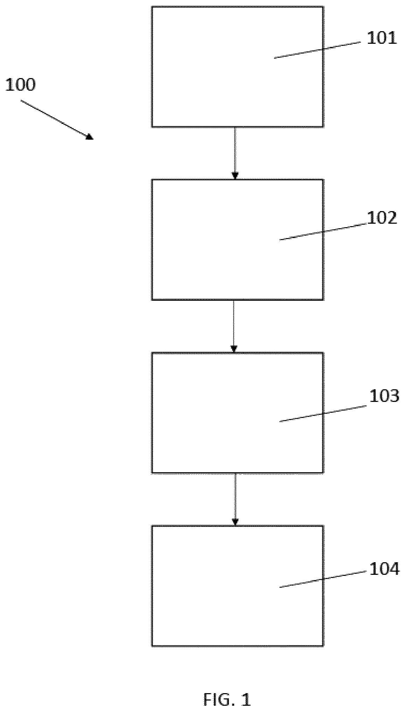

A method of assembling an aircraft wing arrangement for a fixed-wing aircraft will now be described very generally by way of example only with reference to Fig. 1. The method is denoted generally by reference numeral 100, and comprises forming 101 a clamped wing arrangement by clamping at least one wing skin to a wing support structure using at least one clamp and forming 102 at least one fixing aperture in the clamped wing arrangement to facilitate attachment of at least one wing skin to the wing support structure, inserting 103 fixing means through at least one fixing aperture to facilitate securing at least one wing skin to the wing support structure, and securing 104 at least one wing skin to the wing support structure using at least one fixing means. The clamping of the wing support structure to at least one wing skin in the clamped wing arrangement has been configured to facilitate the formation of at least one fixing aperture in the clamped wing arrangement without the formation of a burr. This has been achieved in the present instance using a particular arrangement of clamps, as will now be described in more detail.

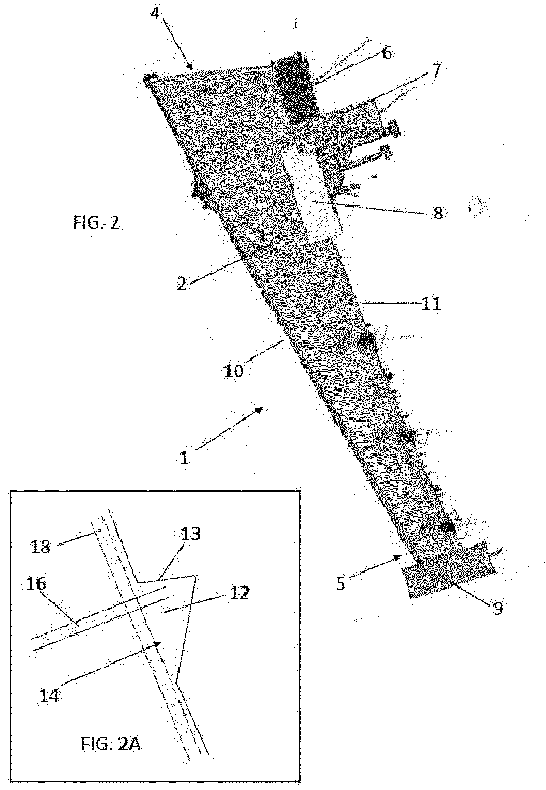

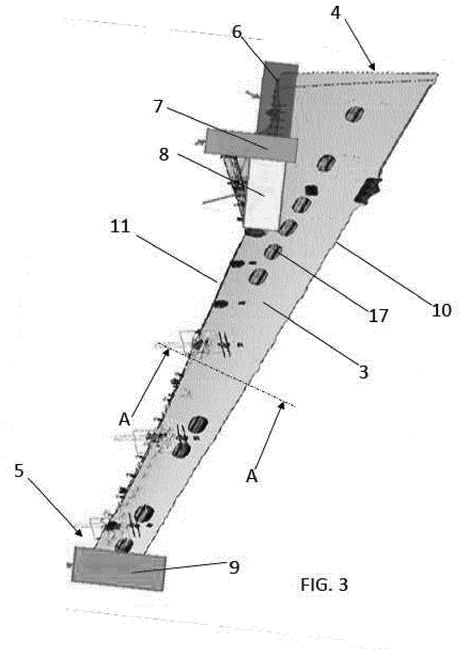

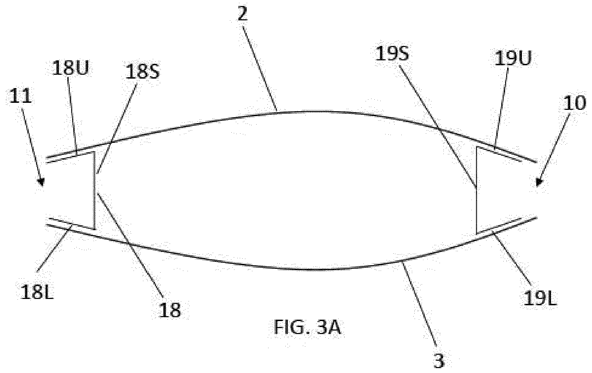

Figures 2, 2A, 3 and 3A show a clamped wing arrangement denoted generally by reference numeral 1 for a fixed-wing aircraft. The aircraft wing arrangement 1 is for a commercial wide-body, twin engine passenger aircraft. The clamped wing arrangement 1 comprises upper 2 and lower 3 wing skins clamped to a wing support structure 17. Clamped wing arrangement 1 has front 10 and rear 11 edges. The upper 2 and lower 3 wing skins are formed from carbon fibre composite. The wing support structure 17 comprises several spars that run along the length of the clamped wing arrangement from an inboard root portion 4 to an outboard wing tip portion 5. Referring to Fig. 3A, wing support structure 17 comprises a rear spar 18 located proximate a rear edge 11 of the clamped wing arrangement and a front spar 19 located proximate a front edge 10 of the clamped wing arrangement. Rear spar 18 comprises upper 18U and lower 18L flanges that extend outwardly (rearwardly) from spar member 18S. Front spar 19 comprises upper 19U and lower 19L flanges that extend outwardly (forwardly) from spar member 19S. Other spars (not shown) are provided between the front 19 and rear 18 spars. The spars are formed from carbon fibre composite. It is believed that the particular arrangement of the front 19 and rear 18 spars facilitates clamping of the clamped wing arrangement such that burrs are not formed on drilling. The wing support structure 17 also comprises a plurality of ribs (not shown) as is well-known to those skilled in the art. In order to make the clamped wing arrangement 1, the lower wing skin 3 and upper wing skin 2 are placed relative to the wing support structure 17, and moved until the upper wing skin, lower wing skin and wing support structure are in the desired position. Clamps are then applied to clamp the upper 2 and lower 3 wing skins to the wing support structure 17, as will now be described. Clamps are applied in a first clamping region 9 at the wing tip 5. Clamps are also applied in a second clamping region 6 at the rear edge 11 of the clamped wing arrangement proximate to the inboard root region 4. The clamps in this second clamping region 6 apply pressure to the rear spar (not shown). Clamps are applied in a third clamping region 7, at an inward facing edge 13 of rearward projecting portion 12. This rearward projection portion 12 is associated with gear rib 16, which is used to support the main landing gear. Clamps are also applied in a fourth clamping region 8, which is adjacent the forward portion 14 of rearward projecting portion 12. The clamps in the fourth clamping region 8 apply pressure to a portion of the rear spar 18. The clamps are applied with sufficient force so that when a hole is drilled through a wing skin 2, 3, then no burr forms as a result of the drilling. This means that there is no need to remove the wing skin 2, 3 in order to facilitate burr removal. A further description of the arrangement of the clamps, and the clamps themselves, in each of the first 9, second 6, third 7 and fourth 8 clamping regions will now be described.

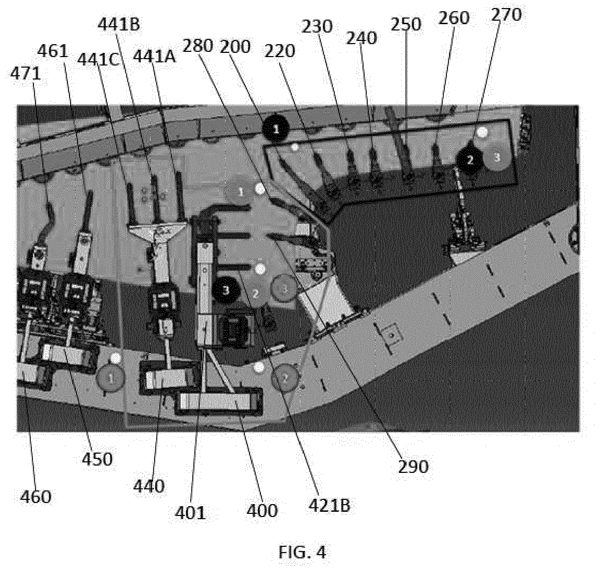

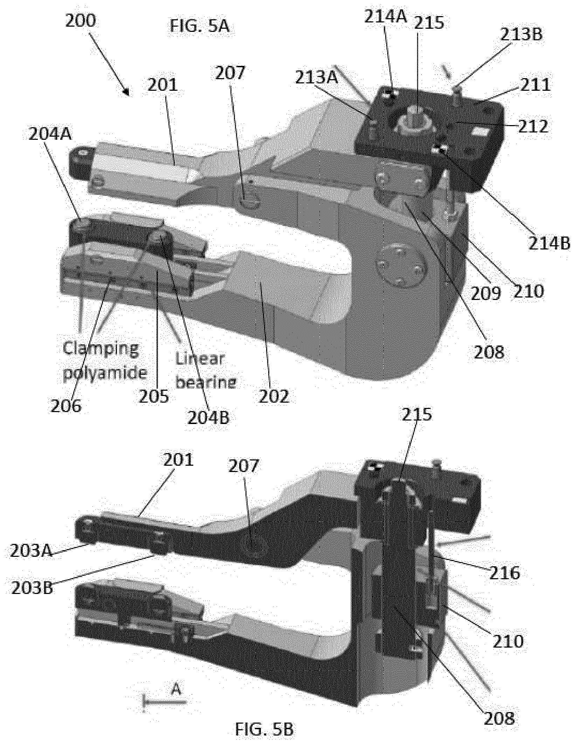

Figure 4 shows the area around the rearward projecting portion 12. A set of clamps 200, 220, 230, 240, 250, 260, 270, 280, 290 has been applied to the second 6 and third 7 clamping regions. Clamp 200 will now be described in more detail with reference to Figs. 5A and 5B. Clamp 200 comprises a first arm 201 and a second arm 202. Clamping surfaces 203A, B are coupled to first arm 201. Clamping surfaces 204A, B are coupled to second arm 202. Each clamping surface 203A, B, 204A, B is provided on a swivel or rocker arrangement to permit movement of the respective clamping surface to ensure that it engages correctly with a wing skin. First arm 201 is mounted approximately centrally on a pivot 207 and is coupled at one end to a clamp operating mechanism 208, which moves clamping surfaces 204A, B relative to clamping surfaces 203A, B. Operation of clamp operating mechanism 208 causes rotation of the second arm 202 about pivot 207, causing the movement of clamping surfaces 204A, B relative to clamping surfaces 203A, B, thereby operating the clamp 200 between clamping and non-clamping configurations. Clamping surfaces 204A, B are mounted on a carrier 205 which is coupled to second arm 202 via a linear bearing 206. This permits the movement of clamping surfaces 204A, B relative to second arm 202 in a direction substantially parallel to the longitudinal axis of second arm 202. This provides extra flexibility in relation to the positioning of the clamping surfaces. As mentioned above, clamp operating mechanism 208 is operated to move arm 201. In this connection, clamp operating mechanism 208comprises a threaded rotatable member 209 which is rotatable within, and relative to, a threaded fixed nut 210. Rotation of the threaded rotatable member 209 relative to the fixed nut 210 causes movement of the threaded rotatable member 209 up or down, depending on the direction of rotation. The movement of the threaded rotatable member 209 causes corresponding movement of first arm 201 and the associated clamping surfaces 203A, B.

Clamp 200 comprises an operation interface 211 configured to facilitate movement and operation of the clamp 200 by an automated apparatus, such as an industrial robot. The operation interface 211 comprises an interface surface 212 for engagement with a corresponding interface surface provided by an automated apparatus. The interface surface 212 in the present case is substantially planar for engagement with a corresponding substantially planar interface surface provided by an automated apparatus. Operation interface 211 comprises an attachment arrangement 213A, B configured to facilitate attachment to a corresponding attachment arrangement provided by an automated apparatus. In the present case, clamp attachment arrangement 213A, B comprises two male portions for mating with corresponding female portions provided by an automated apparatus. Operation interface 211 also comprises an information placard 214A, B readable by an automated apparatus, the information placard 214A, B being readable by an automated apparatus to provide information in relation to the orientation of clamp 200. Operation interface 211 facilitates the handling and control of clamp 200 by an automated apparatus, such as an industrial robot. The automated apparatus, when engaged with the operation interface 211, may move the clamp 200 to a desired location for clamping.

The clamping operation by an automated apparatus is now described. Clamp operating mechanism 208 comprises an interface configuration 215 configured to facilitate operation of the clamp operating mechanism 208by an automated apparatus. In the present case, the interface configuration 215 is in the form of a linear slot, similar to the head of a screw to be used with a flat-head screwdriver. In use, the slot is engaged by a corresponding configuration provided by the automated apparatus (in this case, something similar to the head of a flat-head screwdriver). When the slot associated with the clamp operating mechanism 208 is engaged by the corresponding flat-head screwdriver configuration provided by an automated apparatus, the automated apparatus may operate the clamp operating mechanism 208. The automated apparatus may then control the operation of the clamp 200 between clamping and non-clamping configurations.

When the clamp 200 is at a desired location, the clamp 200, is presented to the aircraft components with the clamp 200 in a non-clamping, open configuration, the wing skins 2, 3 and wing support structure 17 being received by the open clamp 200. In this connection, clamp 200 is provided with an indicator 216 for indicating whether or not clamp 200 is in an open, non-clamping configuration. The automated apparatus is capable of interrogating the indicator 216 to determine whether or not clamp 200 is in an open configuration. If not, the automated apparatus may drive the clamp operating mechanism 208so that the clamp 200 is in an open configuration. The indicator 216 comprises a steel bar that is moveable as the clamp 200 moves between a non-clamping, open configuration and a non-open configuration. When the clamp 200 is in a non-clamping, open configuration, the steel bar is in a lowermost position, in which position it is sufficiently close to an inductive sensor provided in the automated apparatus for the presence of the steel bar to be sensed by the inductive sensor. When the clamp is in a different configuration (i.e. not in the open configuration), the steel bar is sufficiently remote from the inductive sensor that the sensor cannot sense the presence of the steel bar. When clamp 200 is in the desired location, as determined by the automated apparatus, then the automated apparatus drives the clamp operating mechanism 208, moving second arm 202 and the associated clamping surfaces 204A, B towards lower wing skin 3, eventually driving clamping surfaces 204A, B into contact with the lower wing skin 3 and clamping surfaces 203A, B into contact with upper wing skin 2. As clamping contact is established between the clamping surfaces 203A, B, 204A, B and the upper 2 and lower 3 wing skins, the resistance to rotation of actuator 208 increases dramatically. At a certain torque, the automated apparatus ceases to drive the clamp operating mechanism 208. This effectively controls the clamping force applied by clamp 200. The removal of clamp 200, when desired, is effectively the reverse of the described process for applying the clamp 200. In use, clamp 200 applies a clamping force of 10000N.

Each of clamps 220, 230, 240, 250, 260, 270, 280, 290 has many similarities to clamp 200, as will now be described. Each clamp 220, 230, 240, 250, 260, 270, 280, 290 is relatively small and lightweight. Each comprises a lower arm and a pivotally-mounted upper arm that is movable by an actuator to operate the clamp between non-clamping configurations. Each clamp 220, 230, 240, 250, 260, 270, 280, 290 comprises the same operation interface 211 and the same actuator interface 215 as clamp 200. Each clamp 220, 230, 240, 250, 260, 270, 280, 290 is operated in substantially the same way as clamp 200. There are also differences between some of the clamps. For example, some of the clamps may not be provided with a movable carrier that permits translational movement of some of the clamping surfaces. Furthermore, the arms may be of different length to those of clamp 200, depending on where a particular clamp is to be used, resulting in differing "throat" sizes. Furthermore, the "jaw opening" of the clamp (which determines the maximum thickness that can be clamped) may be different to clamp 200.

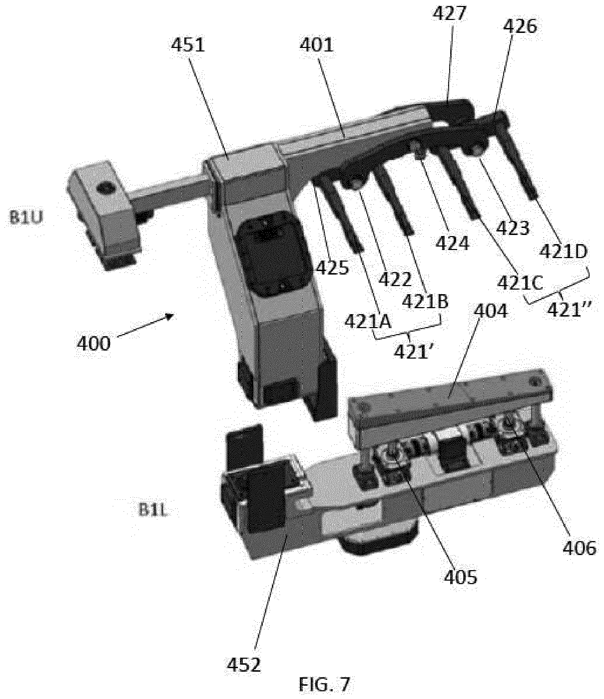

A different set of clamps 400, 440, 450, 460 has been applied to fourth clamping region 8. Clamp 400 will now be described in more detail, with reference to Figs. 4 and 7. Clamp 400 has a first part 451 and a second part 452, which are attachable to form clamp 400. In use, the first part 451 is an upper part and the second part 452 is a lower part. In use, the first 451 and second 452 parts are delivered separately to the desired location and are then connected to form clamp 400. This has proved to be more convenient than connecting the first 451 and second 452 parts, and then moving the assembled clamp 400 to the desired clamping location, primarily due to the large size and weight of the clamp 400. Lower part 452 is provided with a clamping surface 404 that is movable by two linear actuators 405, 406. Upper part 451 comprises arm 401 to which is coupled four fingers 421A, B, C, D, each of which is provided with at least one clamping surface (not shown). Each such clamping surface is mounted on a swivel head or rocker arrangement that facilitates movement of the clamping surface to ensure that the clamping surface correctly engages a surface of the wing skin, as will now be described. Fingers 421A and 421B may be considered to be a first set 421' of fingers. They are attached to connector 425, which is mounted for rotational motion about axis 422. Fingers 421A and 421B may therefore rock about axis 422, to facilitate contact of the respective fingers with an underlying surface. Similarly, fingers 421Cand 421D may be considered to be a second set 421" of fingers. They are attached to connector 426, which is mounted for rotational motion about axis 423. Fingers 421C and 421D may therefore rock about axis 423, to facilitate contact of the respective fingers with an underlying surface. Both sets 421', 421" of fingers are mounted via axes 422, 423 to a rocker arm 427. Rocker arm 427 is pivotally attached to arm 401 at axis 424 so that rocker arm 427 may rock about axis 424. This allows the sets 421', 421" to be moved to conform to the shape of an underlying surface. Movement of the clamping surface 404 causes the clamp 400 to be operated between clamping and non-clamping configurations. In use, the longitudinal axis of each of the fingers 421A, B, C, D extends normal to the longitudinal axis of gear rib 16. A clamping force of 20000N is provided by clamping surface 404 and fingers 421A-D.

Like clamp 200, clamp 400 comprises an operation interface (not shown) to facilitate operation of clamp 400.

Clamps 440, 450, 460 are of the same type as clamp 400. They are relatively large, having to span the rearward projecting portion 12 and apply pressure in the region of the rear spar.

Like clamp 400, clamps 440, 450, 460 are provided in two parts, a first part and a second part that may be connected together to form the respective clamp. The provision of two parts, in use an upper and a lower part, facilitates the movement of the two parts separately to the wing which is to be clamped. Whereas the upper part of clamp 400 has four, the upper part of clamp 440 is provided with three fingers 441A, B, C, each of which is provided with at least one clamping surface that contacts the wing skin when the clamp 440 is in a clamping configuration. In use, the longitudinal axis of each of the three fingers 441A, B, C is approximately normal to the longitudinal axis of the rear spar 18. The upper part of each of clamps 450 and 460 is provided with a single finger 461, 471, each of which is provided with at least one clamping surface that contacts the wing skin when the clamp is in a clamping configuration. The applicant has discovered that the use of fingers to mount clamping surfaces may be advantageous, because the fingers take-up a relatively small amount of room and permit apertures to be formed between adjacent fingers.

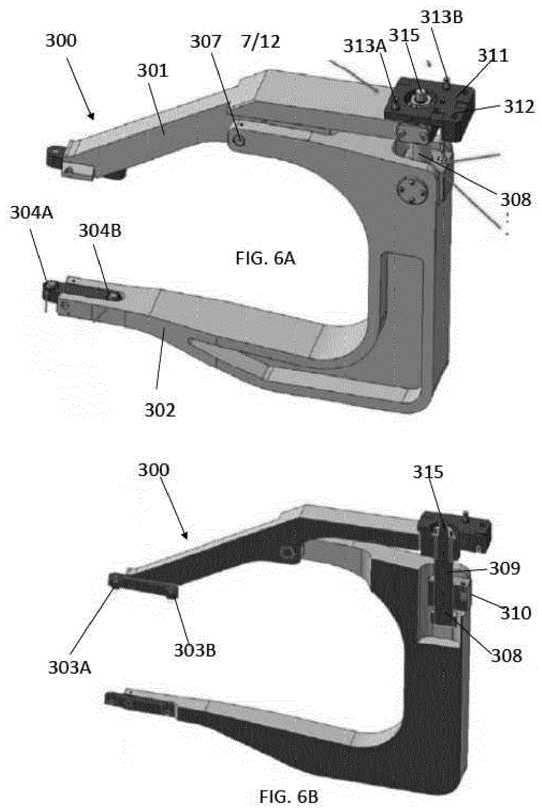

Several clamps are located at the first clamping region 9 at wing tip 5. One of those clamps 300 will now be described in more detail with reference to Figs. 6A and 6B. Clamp 300 is very similar to clamp 200, as will now be described, but clamp 300 has a wider jaw opening than clamp 200. Clamp 300 comprises a first arm 301 and a second arm 302. Clamping surfaces 303A, B are coupled to first arm 201. Clamping surfaces 304A, B are coupled to second arm 302. Each clamping surface 303A, B, 304A, B is provided on a swivel or rocker arrangement to permit movement of the respective clamping surface to ensure that it engages correctly with a wing skin. First arm 301 is mounted approximately centrally on a pivot 307 and is coupled at one end to an actuator 308. Operation of the actuator 308 causes rotation of the first arm 301 about pivot 307, causing the movement of clamping surfaces 303A, B relative to clamping surfaces 304A, B, thereby operating the clamp 300 between clamping and non-clamping configurations. In use, clamp 300 provides a clamping force of 10000N.

As mentioned above, actuator 308 is operated to move arm 301. In this connection, actuator 308 comprises a threaded rotatable member 309 which is rotatable within, and relative to, a threaded fixed nut 310. Rotation of the threaded rotatable member 309 relative to the fixed nut 301 causes movement of the threaded rotatable member 309 up or down, depending on the direction of rotation. The movement of the threaded rotatable member 309 causes corresponding movement of first arm 301 and the associated clamping surfaces 303A, B.

Clamp 300 comprises essentially the same operation interface 311 as clamp 200. The operational interface 311 is configured to facilitate operation of the clamp 300 by an automated apparatus, such as an industrial robot. The operation interface 311 comprises an interface surface 312 for engagement with a corresponding interface surface provided by an automated apparatus. The interface surface 312 in the present case is substantially planar for engagement with a corresponding substantially planar interface surface provided by an automated apparatus. Operation interface 211 comprises an attachment arrangement 313A, B configured to facilitate attachment to a corresponding attachment arrangement provided by an automated apparatus. In the present case, clamp attachment arrangement 313A, B comprises two male portions for mating with corresponding female portions provided by an automated apparatus. Operation interface 311 facilitates the handling and control of clamp 300 by an automated apparatus, such as an industrial robot. The automated apparatus, when engaged with the operation interface 311, may move the clamp 300 to a desired location for clamping.

The clamping operation by an automated apparatus is now described. Actuator 308 comprises an interface configuration 315 configured to facilitate operation of the actuator by an automated apparatus. In the present case, the interface configuration 315 is in the form of a linear slot, similar to the head of a screw to be used with a flat-head screwdriver. In use, the slot is engaged by a corresponding configuration provided by the automated apparatus (in this case, something similar to the head of a flat-head screwdriver). When the slot associated with the actuator is engaged by the corresponding flat-head screwdriver configuration provided by an automated apparatus, the automated apparatus may operate the actuator. The automated apparatus may then control the operation of the clamp 300 between clamping and non-clamping configurations.

When the clamp 300 is at a desired location, the clamp 300, is presented to the aircraft components with the clamp 300 in a non-clamping, open configuration, the wing skin and aircraft structure arrangement being received by the open clamp 300. In this connection, clamp 300 is provided with an indicator (not shown) for indicating whether or not clamp 300 is in an open, non-clamping configuration. The automated apparatus is capable of interrogating the indicator to determine whether or not clamp 300 is in an open configuration. If not, the automated apparatus may drive the actuator 308 so that the clamp 300 is in an open configuration. When clamp 300 is in the desired location, as determined by the automated apparatus, then the automated apparatus drives the actuator 308, moving first arm 301 and the associated clamping surfaces 303A, B towards upper wing skin 2, eventually driving clamping surfaces 303A, B into contact with the upper wing skin 2 and clamping surfaces 204A, B into contact with the aircraft structural arrangement 17. As clamping contact is established, the resistance to rotation of actuator 308 increases dramatically. At a certain torque, the automated apparatus ceases to drive the actuator 308. This effectively controls the clamping force applied by clamp 300. The removal of clamp 300, when desired, is effectively the reverse of the described process for applying the clamp 300.

It has been described above as to how it is possible to form a clamped wing arrangement in which clamps are applied in such a manner that burrs do not occur as a result of drilling. The formation of fixing apertures may be performed by an automated apparatus, such an automated drilling machine. The formation of fixing apertures in the present case involves an automated drilling machine forming fixing apertures without forming pilot holes. This is obviously desirable because this reduces the number of operations needed to construct the wing. For the avoidance of doubt, fixing apertures are sized to accommodate a fixture means, such as the shaft of a rivet. Those skilled in the art will realise that a pilot hole is not sufficiently large to accommodate a fixture means of a desired and pre-determined size. For the avoidance of doubt, the present invention does not preclude the formation of a pilot hole from which a fixing aperture is subsequently formed. The fixing apertures are typically formed using drill bits each having a diameter of 10 to 30mm. Those skilled in the art will realise that different drill bits may be used on different parts of the clamped wing arrangement.

Those skilled in the art will realise that it is not necessary for all clamps to have been be applied before fixing apertures are formed. In this connection, it is merely sufficient that sufficient clamps have been applied so that burrs do not occur as a result of drilling.

Once a fixing aperture has been formed, a fixing means, such as a rivet, may be introduced into the fixing aperture to facilitate attachment of a wing skin 2, 3 to the wing support structure 17. The fixing means may then be used to secure the wing skin 2, 3 to the wing support structure 17. The fixing means may be introduced and/or secured using an automated apparatus, for example.

Those skilled in the art will realise that it is not necessary to form all of the desired fixing apertures before introducing fixing means into the apertures, and attaching the wing skin 2, 3 to the wing support structure 17.

Furthermore, the method may comprise removing at least one clamp to facilitate forming one or more fixing apertures, for example, in positions that were inaccessible due to the previous location of the clamp.

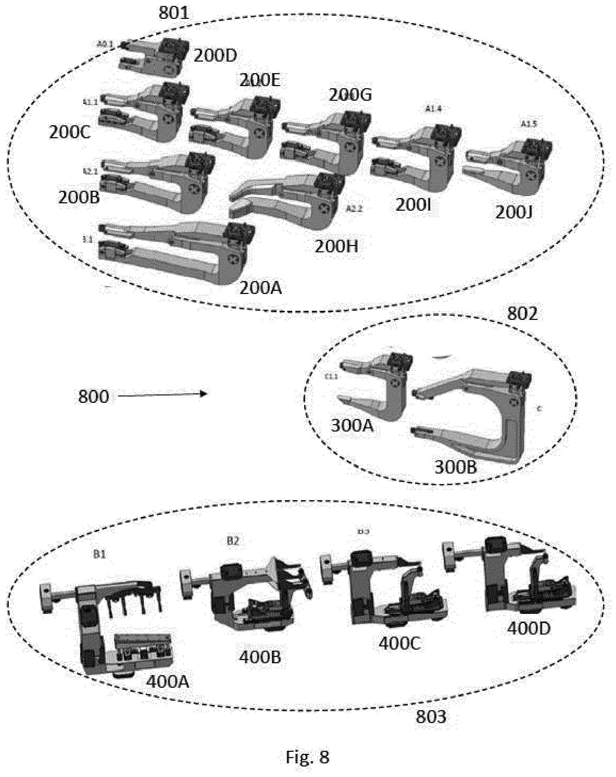

As can be determined from the examples above, it is beneficial for achieving satisfactory clamping to have a group of clamps, in which at least some of the clamps have different properties. In this connection, an embodiment of a group of clamps will now be described by way of example only with reference to Fig. 8. Figure 8 shows a group of clamps denoted generally by reference numeral 800. Group 800 comprises a first set 801 of clamps 200A-J. The clamps 200A-J of the first set 801 are, in use, located in second 6 and third 7 clamping regions shown in Figs. 2, 2A and 3. Clamps 200A-J have the features of clamps 200, 220, 230, 240, 250, 260, 270, 280, 290 as described above. Group 800 comprises a second set 802 of clamps 300A, B. Clamps 300A-B are, in use, located in first clamping region 9 at the wing tip 5, as showing in Figs. 2 and 3. Clamps 300A, B have the features of clamp 300 described above. Group 800 comprises a third set 803 of clamps 400A-D. Clamps 400A-D are located, in use, in the fourth clamping region 8, as shown in Figs. 2, 2A and 3. Clamps 400A-D have the features of clamp 400, 440, 450, 460 described above, respectively. Group 800 has proved to be particularly effective in facilitating clamping that inhibits the formation of burrs on drilling.

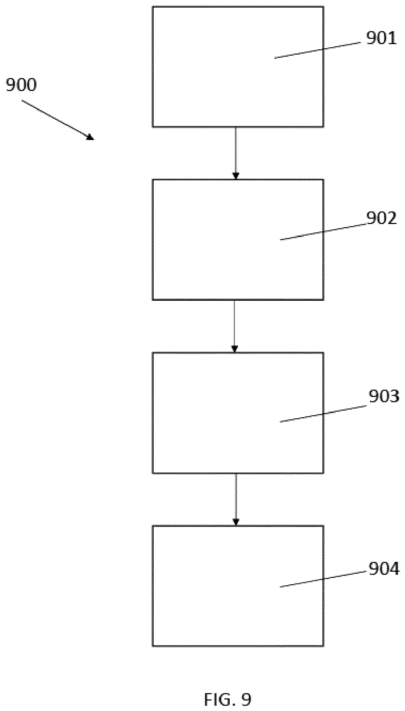

The examples above described how it is possible to provide a clamping arrangement that facilitates the formation of fixing apertures without forming burrs. This facilitates the formation of fixing apertures in the clamped wing arrangement without having to dissemble the clamped wing arrangement. An embodiment of a method of the second aspect of the present invention will therefore be described by way of example only with reference to Fig. 9. The method of assembling an aircraft wing for a fixed-wing aircraft is denoted generally by reference numeral 900. The method 900 comprises forming 901 a clamped wing arrangement by clamping at least one wing skin to a wing support structure using at least one clamp. This has been described extensively above. The method 900 also comprises one or both of: (a) forming at least one fixing aperture in the clamped wing arrangement to facilitate attachment of at least one wing skin to the wing support structure, at least one of the fixing apertures being formed without previously having formed a pilot aperture; and (b) forming at least one pilot hole in the clamped wing arrangement, and then forming at least one fixing aperture using a respective pilot hole in the clamped wing arrangement. In case (a), the fixing aperture is formed without using a pilot hole. In case (b), both the pilot hole and the fixing aperture are formed without dissembling the clamped wing arrangement between the formation of the pilot hole and the formation of the fixing aperture. The method 900 comprises inserting 903 fixing means through at least one fixing aperture to facilitate securing at least one wing skin 2, 3 to the wing support structure 17, and attaching 904 at least one wing skin 2, 3 to the wing support structure 17, substantially as described above.

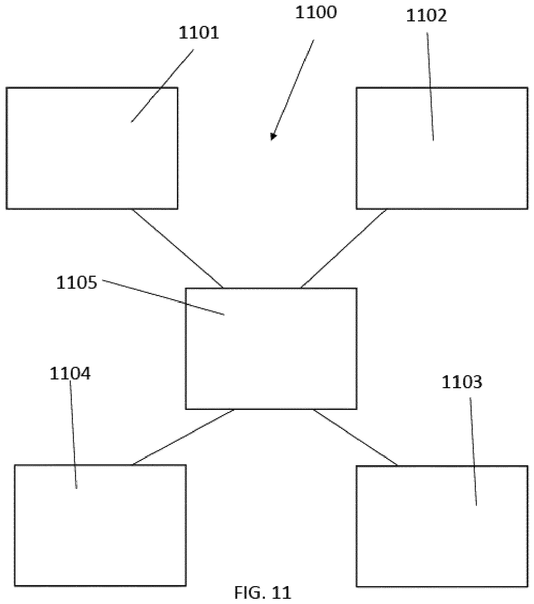

As explained above, the methods of the present invention may be performed using a suitably-programmed automated apparatus. An embodiment of such an apparatus will now be described by way of example only with reference to Fig. 11. The apparatus is denoted generally by reference numeral 1100, and comprises a clamp-handling module 1101 operable to form a clamped wing arrangement by clamping a wing support structure to at least one wing skin using at least one clamp. The clamp-handling module 1101 comprises an interface configured to engage and interface with the operation interfaces provided on the clamps described above. The clamp-handling module comprises two female regions for receiving the two male members provided on the operation interface of the clamps. The two female regions are recessed relative to a planar surface that engages with the corresponding planar surface provided on the clamp operation interface. The clamp-handling module comprises a means for interrogating the information placards provided on the clamp operation interface. The clamp-handling module also comprises a flat-head screwdriver configuration for engaging with the slot provided in the actuator of the clamp. The flat-head screwdriver configuration is coupled to a torque limiter that inhibits the application of too great a torque to the clamp actuator.

The apparatus 1100 also comprises an aperture-forming module 1102 operable to form at least one fixing aperture in the clamped wing arrangement to facilitate attachment of at least one wing skin to the wing support structure. In this connection, the aperture-forming module 1102 is an automated drill. The apparatus 1100 comprises a fixing-handling module 1103 configured to insert fixing means through at least one fixing aperture to facilitate securing at least one wing skin to the wing support structure and an attachment module 1104, in this case, an automated riveter, configured to secure at least one wing skin to the aircraft structure arrangement using at least one fixing means. The apparatus 1100 also comprises control module 1105 which is in communication with the clamp-handling module 1101, the aperture-forming module 1102, the fixing-handling module 1103 and the attachment module 1104. The control module 1105 is configured to transmit control signals to, and receive information from, the clamp-handling module 1101, the aperture-forming module 1102, the fixing-handling module 1103 and the attachment module 1104.

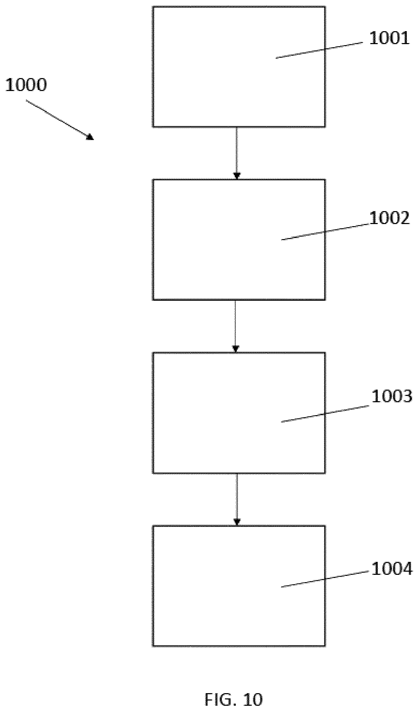

The apparatus described above in relation to Fig. 11 facilitates an embodiment of a method in accordance with the third aspect of the present invention, as will now be described by way of example only with reference to Fig. 10. The method of assembling an aircraft wing arrangement for a fixed-wing aircraft is denoted generally by reference numeral 1000, and comprises forming 1001 a clamped wing arrangement by clamping at least one wing skin to a wing support structure using at least one clamp, forming 1002 at least one fixing aperture in the clamped wing arrangement to facilitate attachment of at least one wing skin to the wing support structure, inserting 1003 fixing means through at least one fixing aperture to facilitate securing at least one wing skin 2, 3 to the wing support structure 17 and attaching 1004 at least one wing skin 2, 3 to the wing support structure 17 using at least one fixing means. Forming 1001 a clamped wing arrangement is performed by a clamp-handling module 1101, as described above. Forming 1002 at least one fixing aperture is performed by an aperture-forming module 1102, as described above. Inserting 1003 fixing means is performed using a fixing-handling module 1103, as described above. Attaching 1004 at least one wing skin 2, 3 to the wing support structure 17 is performed using an attachment module 1104, as described above.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The examples above describe one particular arrangement of clamps that may be used to ensure that the wing skins and aircraft structure arrangement are sufficiently well clamped together such that burrs do not form in the drilling process. Those skilled in the art will realise that other arrangements of clamps would be possible.

The examples above describe the present invention in relation to a relatively large wing. Those skilled in the art will realise that any suitable fixed-wing could be made using the present invention.

The examples above describe the present invention in relation to a wing in which the wing support structure is relatively conventional in that it comprises spars and ribs. Those skilled in the art will realise that alternative wing support structures may be used.

The examples above describe the use of carbon fibre composite wing skins. Those skilled in the art will realise that other materials may be used.

The examples above describe the use of a particular group of clamps. Those skilled in the art will realise that different groups of claims may be used, particularly dependent on the shape of the wing, and the nature of the aircraft structure arrangement.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A clamp for securing an aircraft wing skin to an aircraft wing support structure, the clamp comprising:
a means for operating the clamp between a non-clamping configuration and a clamping configuration;
an operation interface configured to facilitate movement and/or operation of the clamp by an automated apparatus,
the operation interface comprising an attachment arrangement configured to facilitate attachment to a corresponding attachment arrangement provided by an automated apparatus;
the means for operating the clamp between a non-clamping configuration and a clamping configuration being provided with an interface configuration configured to facilitate operation of the means for operating the clamp between a non-clamping configuration and a clamping configuration by an automated apparatus, and/or the means for operating the clamp between a non-clamping configuration and a clamping configuration is provided with a prime mover for operating the clamp between a non-clamping configuration and a clamping configuration, the prime mover being operable by an automated apparatus.

2. The clamp according to claim 1, wherein the attachment arrangement comprises at least one male or female portion for mating with a corresponding female or male portion provided by an automated apparatus.

3. The clamp according to claim 2, wherein the attachment arrangement comprises at least two male or female portions, or at least one male and at least one female portions for mating with corresponding female or male portions provided by an automated apparatus.

4. The clamp according to any preceding claim, wherein the operation interface comprises an information provider readable by an automated apparatus, the information provider optionally being readable by an automated apparatus to provide information in relation to one or more of the identity, location, orientation, and operational status of the clamp.

5. The clamp according to any preceding claim, wherein the interface configuration comprises a configuration for engagement with a corresponding configuration providing by an automated apparatus.

6. The clamp according to claim 5, wherein the interface configuration comprises a male or female configuration for mating with a corresponding female or male configuration provided by an automated apparatus.

7. The clamp according to any preceding claim, wherein the means for operating the clamp between a non-clamping configuration and a clamping configuration comprises a rotatable member configured to be rotatable so as to cause movement between the non-clamping and clamping configurations.

8. The clamp according to any preceding claim, wherein the clamp comprises a first class lever, with a pivot being provided between (i) the means for operating the clamp between a non-clamping configuration and a clamping configuration and (ii) a clamping surface.

9. The clamp according to any preceding claim, comprising a first part and a second part that are attachable to one another to form the clamp, the first part comprising a first clamping surface, and the second part comprising a second clamping surface.

10. The clamp according to claim 8, wherein the first part comprises a plurality of supporting fingers, each provided at least one first clamping surface.

11. The clamp according to any preceding claim, wherein the clamp is operable to exert a clamping force of at least 5000N.

12. A method of assembling an aircraft wing arrangement for a fixed-wing aircraft, the method comprising:
forming a clamped wing arrangement by clamping at least one wing skin to a wing support structure using at least one clamp in accordance with any preceding claim;
forming at least one fixing aperture in the clamped wing arrangement to facilitate attachment of at least one wing skin to the wing support structure, at least one fixing aperture being formed in the clamped wing arrangement without formation of a burr and
optionally inserting fixing means through at least one fixing aperture to facilitate attachment of at least one wing skin to the wing support structure.

13. A method of assembling an aircraft wing for a fixed-wing aircraft, the method comprising:
forming a clamped wing arrangement by clamping at least one wing skin to a wing support structure using at least one clamp in accordance with any of claims 1 to 11; and
(a) forming at least one fixing aperture in the clamped wing arrangement to facilitate attachment of at least one wing skin to the wing support structure, at least one of the fixing apertures being formed without previously having formed a pilot aperture; and/or
(b) forming at least one pilot hole in the clamped wing arrangement, and then forming at least one fixing aperture using a respective pilot hole in the clamped wing arrangement;
and optionally inserting fixing means through at least one fixing aperture to facilitate attachment of at least one wing skin to the wing support structure.

14. A method of assembling an aircraft wing arrangement for a fixed-wing aircraft, the method comprising:
forming a clamped wing arrangement by clamping at least one wing skin to a wing support structure using at least one clamp in accordance with any of claims 1 to 12;
forming at least one fixing aperture in the clamped wing arrangement to facilitate attachment of at least one wing skin to the wing support structure; and
inserting fixing means through at least one fixing aperture to facilitate attachment of at least one wing skin to the wing support structure;
wherein at least one of forming a clamped wing arrangement, forming at least one aperture and inserting fixing means is performed by a suitably-programmed automated apparatus.

15. An automated apparatus for assembling an aircraft wing arrangement for a fixed-wing aircraft, the apparatus comprising:
a clamp-handling module operable to form a clamped wing arrangement by clamping at least one wing skin to a wing support structure using at least one clamp;
an aperture-forming module operable to form at least one fixing aperture in the clamped wing arrangement to facilitate attachment of at least one wing skin to the wing support structure; and
one or both of:
a fixing-handling module configured to insert fixing means through at least one fixing aperture to facilitate securing at least one wing skin to the wing support structure; and
an attachment module configured to attach at least one wing skin to the aircraft structure arrangement using at least one fixing means.
